# EUROPEAN PATENT SPECIFICATION

(11) **EP 1 093 324 B1**
(45) Date of publication and mention of the grant of the patent: **23.01.2008**
(21) Application number: 00917358.4
(22) Date of filing: 19.04.2000
(51) Int. Cl.: H05B 41/28, H05B 41/24

(54) **DIELECTRIC BARRIER DISCHARGE LAMP LIGHT SOURCE**
DIELEKTRISCHE BEHINDERTE ENTLADUNGSLAMPE
LAMPE A DECHARGE A BARRIERES DIELECTRIQUES

(30) Priority: 30.04.1999 JP 12440199; 06.04.2000 JP 2000105165
(43) Date of publication of application: 18.04.2001
(73) Proprietor: USHIO DENKI KABUSHIKI KAISYA, Tokyo, 100-0004 (JP)
(72) Inventor: OKAMOTO, Masashi, Akashi-shi, Hyogo 673-0877 (JP); ASAHINA, Takashi, Takasago-shi, Hyogo 671-0123 (JP); KUSHIDA, Hiroyuki, Himeji-shi, Hyogo 670-0802 (JP)
(74) Representative: Tomerius, Isabel
(86) International application number: PCT/JP2000/002539
(87) International publication number: WO 2000/067533

(56) References cited:
- EP-A- 0 831 517
- EP-A- 0 871 348
- WO-A-99/46963
- DE-A- 19 801 133
- JP-A- 8 031 585
- JP-A- 8 203 684
- JP-A- 8 264 289
- US-A- 4 429 356
- US-A- 5 864 211

## Description

### Technical Field of Invention

The present invention concerns a light source device that utilizes the light emission and heating generated in discharge gases through so-called dielectric barrier discharge, a dielectric barrier discharge lamp light source device for a dielectric barrier discharge lamp that creates ultraviolet rays via excimer light emission or a lamp termed a noble gas lamp that combines a phosphor, for example.

### Background Technology

Dielectric barrier discharge (also known as ozonizer discharge or silent discharge. Consult "Discharge Handbook" June, 1989, Seventh printing, page. 263, revised new edition issued by the Institute of Electrical Engineers of Japan) is utilized extremely effectively as an excimer lamp for ozonizers or dielectric barrier discharge lamps (for example, gazette of Japanese Patent Kokai Hei-2-7353) or as a noble gas light emission lamp (gazette of Japanese Patent Kokai Hei-9-199285).

EP 0 831 517 A2 discloses a dielectric barrier discharge device in which nonuniformities of light irradiation due to variations in lamp material and processing are prevented by a special voltage supply. It is mentioned that a delay in starting of the discharge might lead to an overvoltage in a transformer of the power supply causing further difficulties. Supplying voltage of a special waveform to the lamp prevents these circumstances. EP 871 348 discloses a power supply device for a low-pressure discharge lamp comprising a detection circuit for detecting an overvoltage inside the lamp and which shuts down the power supply if an overvoltage is detected.

In dielectric barrier discharge one or two dielectrics are present between electrodes (5,6) that enclose a discharge space (3).

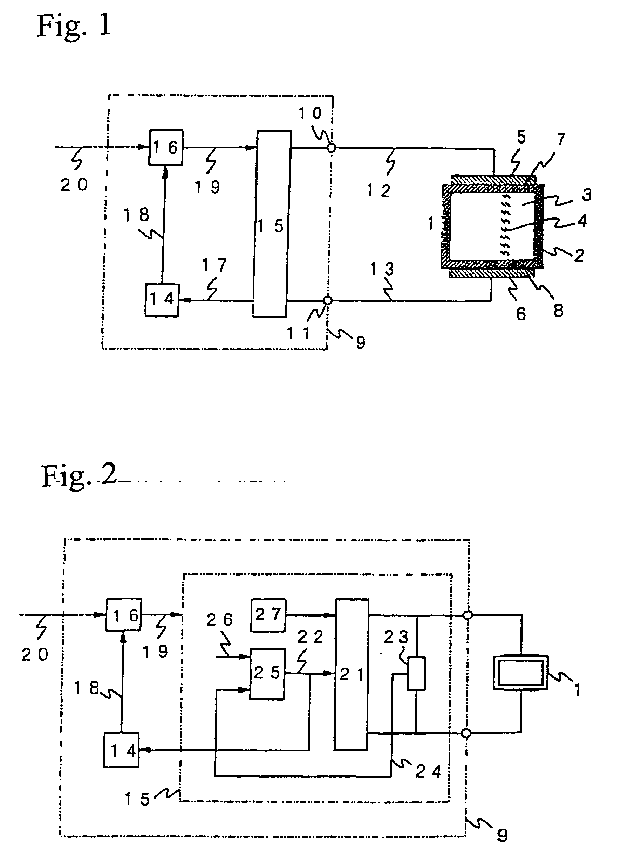

Figure 1 shows a dielectric barrier discharge lamp (1) with two dielectrics (7,8) present.

In this connection, sealed unit (2) combines said dielectrics (7,8) in the dielectric barrier discharge lamp (1) shown in Figure 1.

Current does not directly flow from electrodes (5,6) to discharge space (3) since dielectrics (7,8) are interposed between discharge space (3) and electrodes (5,6). Instead, current flows through dielectrics (7,8) functioning as capacitors.

Equal charges of opposite signs are evoked by dielectric polarization on the side of each electrode (5,6) on the discharge space (3) side of each dielectric (7,8), and are discharged between opposing dielectrics (7,8) that hold discharge space (3) between them.

For that reason, high voltage alternating current of 10 kHz-10 MHz, 1kV-10kV is applied to both electrodes (5,6) when lighting dielectric barrier discharge lamp (1).

The ideal conditions associated with the voltage, frequency, and alternating current voltage waveform would be selected in accordance with the structure of dielectric barrier discharge lamp (1), the discharge gas constituents, pressure, etc.

Of course, the so-called discharge mode termed high frequency discharge or electric field discharge as well as an intermediate form of discharge between these and dielectric barrier discharge are included therein.

Dielectric barrier discharge lamps are extremely useful, as indicated above, but they do present safety-related problems because of their need for the application of high voltage.

For example, if output terminals (10,11) of said power supply device (9) have connectors, there is always the possibility of a poor contact developing, but current would naturally still flow due to discharge if the contact were slightly defective and the lamp would light as though it were apparently normal since output terminals (10,11) are high-voltage charging units. Consequently, a poor contact would not immediately be apparent.

If such events should actually transpire, localized heating due to abnormal discharge at the defective contact or eventual deterioration of peripheral insulation depending on the luminant could occur, and that could theoretically lead to a fire.

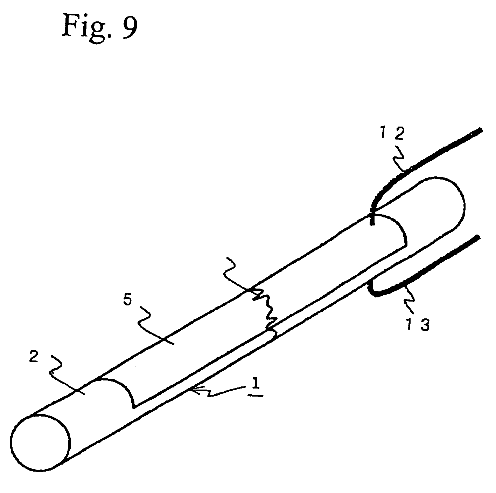

Moreover, if a crack should develop in electrodes (5,6) as shown in Figure 9, current could flow due to discharge, as mentioned above, at the crack site and that could theoretically lead to localized heating.

Under such circumstances, in the case of dielectric barrier discharge lamp (1) that is formed by electrodes (5,6) clad on lamp sealed unit (2), electrodes (5,6) could both theoretically break if cracks should develop in sealed unit (2).

Furthermore, localized heating due to surface discharge developing in the gap between electrodes (5,6) on the surface of lamp sealed unit (2) is also theoretically possible.

Localized heating due to the development of dielectric barrier discharge at the insulation borders of cables connected to both electrodes (5,6) is also theoretically possible.

Furthermore, there is always the possibility of poor contact or poor conduction brought about by poor conduction attributable to poor contact with connectors, imperfect soldering or breakage of circuit board soldering even within transformers (81 or 114) in said power supply device (9) or in the section from the secondary side output terminal of a transformer to output terminals (10,11) of power supply device (9). However, current would naturally still flow due to discharge if the contact or conduction were slightly defective and the lamp would light as though it were apparently normal. Consequently, a poor contact or poor conduction would not immediately be apparent. If such events should actually transpire, localized heating due to abnormal discharge at the site of defective contact or defective conduction, or eventual deterioration of peripheral insulation depending on the luminant could occur, and that could theoretically lead to a fire.

Such abnormal discharge could be detected using a photodetector for the light emission.

In addition, such detectors as a thermal detector, acoustic detector or vibration detector could be used as well.

The detection of ozone generated by ultraviolet rays from abnormal discharge basically would be possible using an ozone detector.

Even if detection were possible using said photo-, thermal-, acoustic-, vibration-, or ozone detectors, it would be unreliable since sites where abnormal discharge could occur are continuously distributed over a broad range, as mentioned above. Furthermore, these safety countermeasures have involved reliance on lowering the probability of abnormal discharge from occurring by using structures and materials having high insulation resistance since said countermeasures would be extremely uneconomical as well as unreliable.

The issue of the present invention is resolved by providing a dielectric barrier discharge lamp light source device capable of safely and economically preventing the hazards of abnormal discharge which could occur within transformers (81 or 114) in said power supply device (9) of a dielectric barrier discharge lamp light source device or in the section from the secondary side output terminal of a transformer to said electrodes (5,6).

### Disclosure of Invention

To resolve this issue, the invention presented in Claim 1 provides a dielectric barrier discharge lamp light source device having discharge space (3) filled with discharge gas that emits light through dielectric barrier discharge, said device provided with a dielectric barrier discharge lamp (1) having a structure in which dielectrics (7,8) are interposed between at least one of two electrodes (5,6) to induce a discharge phenomenon in said discharge gas and a power supply device (9) to provide alternating current high voltage to said electrodes (5,6) of said dielectric barrier discharge lamp (1), wherein said power supply device (9) has abnormal discharge detection circuit (14) to detect abnormal discharge occurring within transformers (81 or 114) in said power supply device (9) or in the section from the secondary side output terminal of a transformer to said electrodes (5,6), said power supply device (9) halting the supply of alternating current high voltage from said power supply device (9) to said dielectric barrier discharge lamp (1) when said abnormal discharge detection circuit (14) detects abnormal discharge, and said abnormal discharge detection circuit (14) characterized by having the ability to detect the abnormal discharge only by electrical behavior of the power supply device (9) which is induced by the abnormal discharge.

The discovery in the second claim of the present invention pertains to the dielectric barrier discharge lamp light source device of Claim 1 in which said power supply device (9) has output level detection means (23) that detects the output roughly proportional to the voltage provided to said dielectric barrier discharge lamp (1), drive circuit (21) that provides high voltage alternating current power to said dielectric barrier discharge lamp (1), and power control circuit (25) that regulates the power of said drive circuit (21), wherein said drive circuit (21) can set the power supply capacity by power regulating signal (22) created by said power control circuit (25), said power control circuit (25) effects feedback control of said power regulating signal (22) so as to minimize the error between output level detection signal (24) created by said output level detection means (23) and output level target signal (26), and said abnormal discharge detection circuit (14) can detect at least one of two cases, either deviation of said power regulating signal (22) from the upper limit of the established power or deviation of said power regulating signal (22) from the lower limit of the established power.

The discovery in the third claim of the present invention pertains to the dielectric barrier discharge lamp light source device Claim 1 or Claim 2, in which said power supply device (9) has output level detection means (23) that detects the output roughly proportional to the power provided to said dielectric barrier discharge lamp (1), drive circuit (21) that provides high voltage alternating current power to said dielectric barrier discharge lamp (1), and power control circuit (25) that regulates the power of said drive circuit (21), wherein said drive circuit (21) can set the power supply capacity by power regulating signal (22) created by said power control circuit (25), said power control circuit (25) effects feedback control of said power regulating signal (22) so as to minimize the error between output level detection signal (24) created by said output level detection means (23) and output level target signal (26), and said abnormal discharge detection circuit (14) can detect if the frequency range component of said power regulating signal (22) having preset fluctuation should exceed an established level.

The discovery in the fourth claim of the present invention pertains to the dielectric barrier discharge lamp light source device according to one of Claims 1 to 3, in which said power supply device (9) has output level detection means (23) that detects the output roughly proportional to the power provided to said dielectric barrier discharge lamp (1) in a stage after said drive circuit (21), and said abnormal discharge detection circuit (14) can detect if the frequency range component of output level detection signal (24) created by said output level detection means (23) having preset fluctuation should exceed an established level.

### Brief Description of Drawings

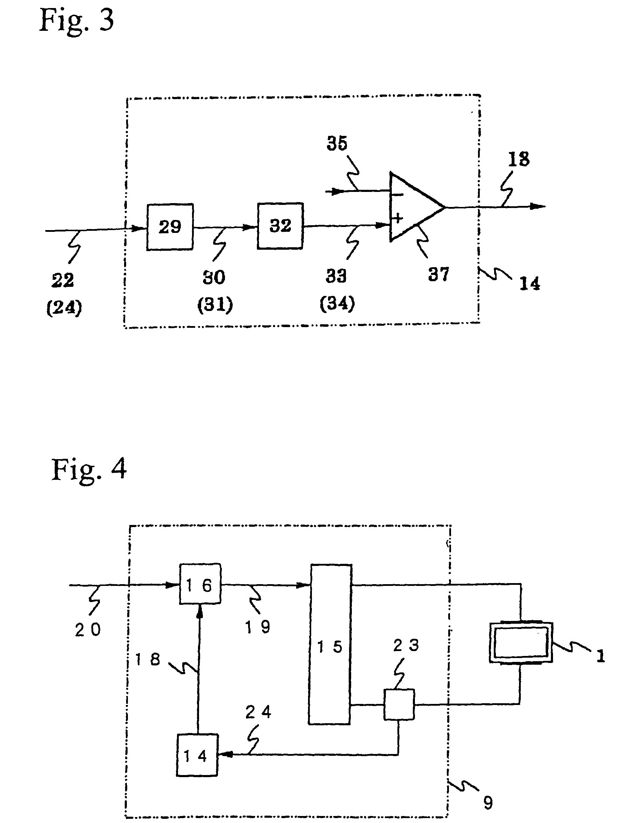

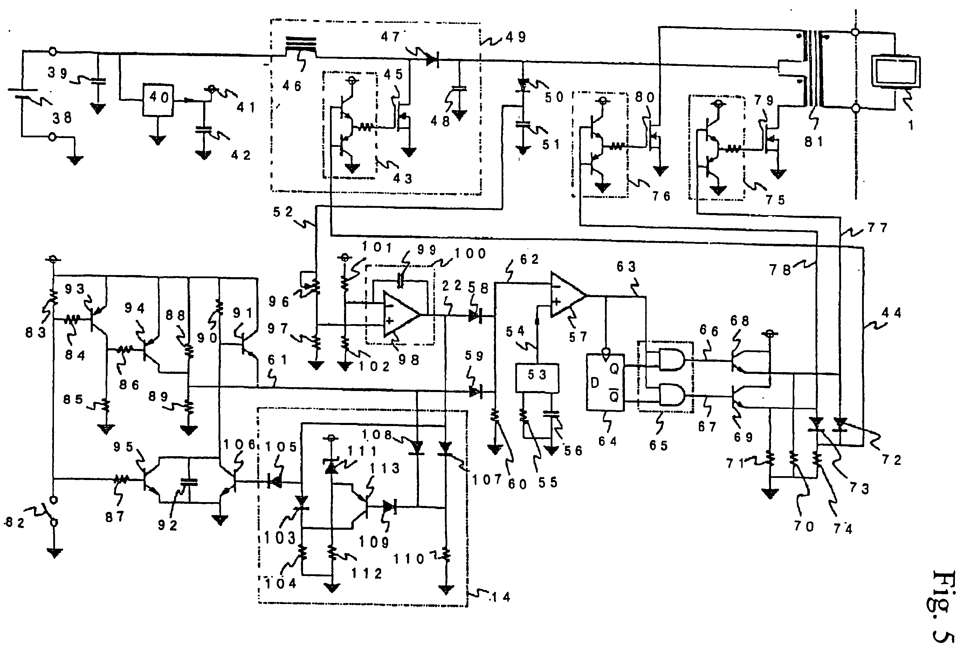

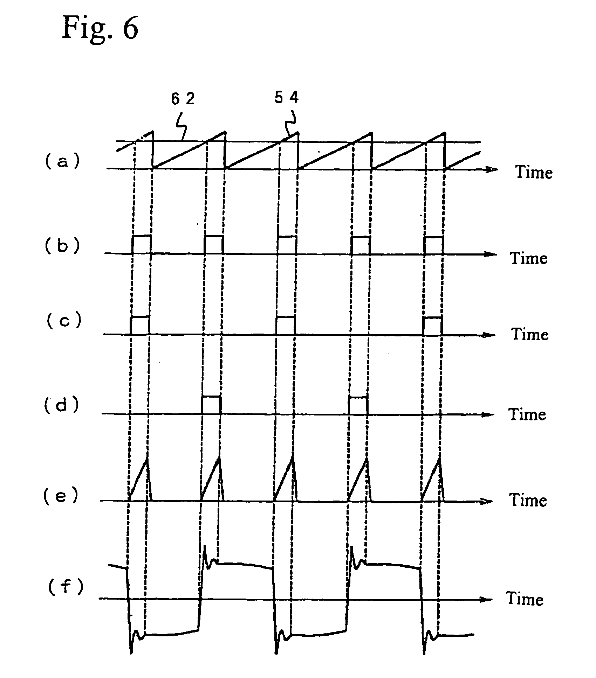

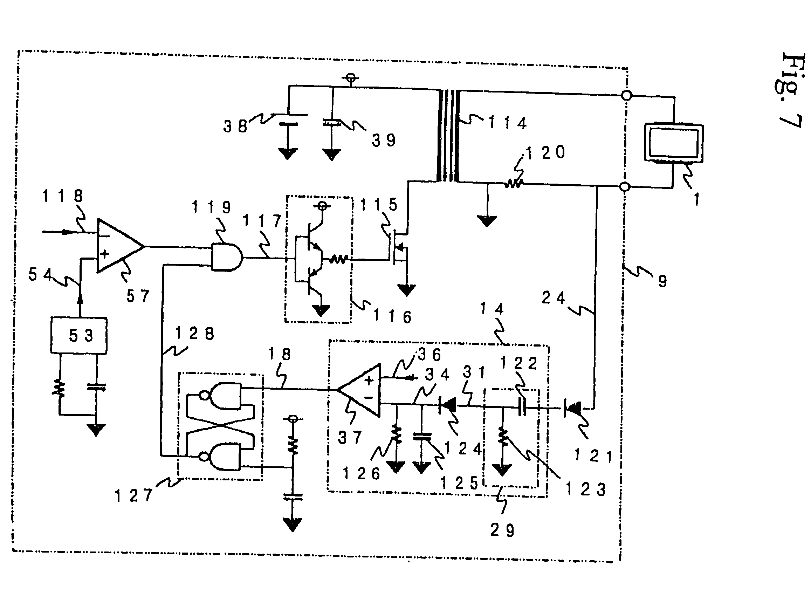

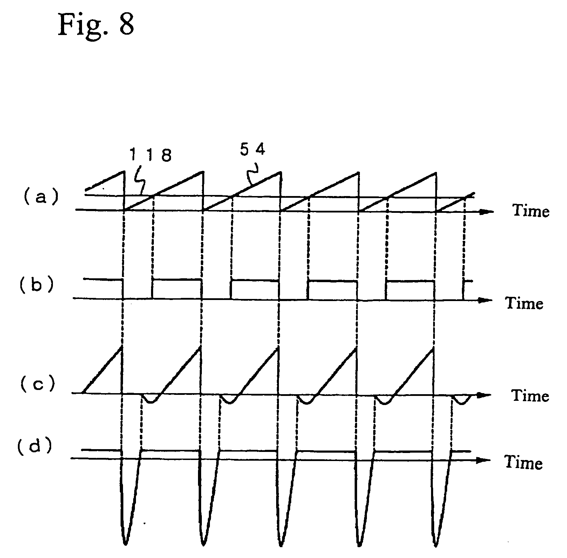

Figure 1 is a simplified block diagram and a conceptual figure for explaining the structure of the invention in Claim 1 of the present invention. Figure 2 is a simplified block diagram for explaining the structure of the invention in Claim 2 of the present invention. Figure 3 is a simplified block diagram for explaining the abnormal discharge detection circuit that detects abnormal discharge due to fluctuation of signals in the present invention. Figure 4 is a simplified block diagram for explaining the structure of the invention in Claim 4 of the present invention. Figure 5 is a simplified block diagram for explaining the first embodiment of the present invention. Figure 6 is a conceptual figure of each waveform in the first embodiment of the present invention. Figure 7 is a simplified block diagram in the second embodiment of the present invention. Figure 8 is a conceptual figure of each waveform in the second embodiment of the present invention. Figure 9 is a conceptual figure for explaining dielectric barrier discharge lamp breakage and electrode disconnection.

### Best Mode for Implementing the Present Invention

The invention of Claim 1 is explained using Figure 1, a simplified diagram showing the concept.

Said abnormal discharge detection circuit (14) is input signal (17) from the electrical constituent member inherent to power supply circuit (15) in power supply device (9) or that as well as the signal from the electrical circuit element without using a detector of special abnormal discharge due to photo-, acoustic-, thermal- or chemical matter, and it detects abnormal discharge which arises or has arisen from the behavior or constituents of this signal.

If said abnormal discharge detection circuit (14) should detect abnormal discharge, said abnormal discharge detection circuit (14) would feed response (18) indicating detection of abnormality to circuit unit (16) that allows power supply, and circuit unit (16) that allows power supply would invalidate signal (19) that allows power supply.

By adopting such a structure, even if sites where abnormal discharge occurs are continuously distributed over a broad range, they could be reliably detected by a single abnormal discharge detection circuit (14) and power supply circuit (15) could be shut down, thereby providing the great benefit of enhancing the safety of a dielectric barrier discharge lamp light source device.

Another significant advantage of the present invention is that the dielectric barrier discharge lamp light source device is extremely economical since it does not use numerous, expensive special abnormal discharge detectors for photo-, acoustic-, thermal- or chemical matter.

Another benefit is that the section of abnormal discharge detection circuit (14) that detects abnormal discharge is structured so as to be present only within power supply device (9), not at output terminals (10,11) of said power supply device (9), at said electrodes (5,6), at connection means (12,13) of output terminals (10,11) of said power supply device (9) and electrodes (5,6), nor within transformers (81 or 114) shown in Figures 5 and 7 below or in the vicinity of the course from the secondary side output terminal of the transformer to said output terminals (10,11). Consequently, spare wiring and connections from power supply device (9) to distant detectors can be omitted, which has the benefit of enhancing the reliability of the dielectric barrier discharge lamp light source device.

Once circuit unit (16) that permits said power supply receives a response (18) from said abnormal discharge detection circuit (14) that said abnormality has been detected, operation of a latch circuit would be best so as to maintain said signal (19) of permitted power supply in an invalidated state so long as a reset operation is not carried out such as cutoff of the power source.

Circuit unit (16) that permits power supply can be input external control signal (20) to command dielectric barrier discharge lamp (1) of the dielectric barrier discharge lamp light source device to be turned ON/OFF from outside, and signal (19) that permits power supply to power supply circuit (15) may be transmitted only if external control signal (20) has issued an ON command and response (18) that said abnormal has been detected has not been received.

Next, the invention of Claim 2 is explained using Figure 2 which is a simplified diagram for showing the concept.

Drive circuit (21) that supplies alternating current high-voltage power to said dielectric barrier discharge lamp (1) primarily comprises drive DC power source (27), various inverters including a push-pull inverter, half-bridge inverter, full-bridge inverter, flyback inverter, and a boosting transformer. This permits the power that is supplied to lamp (1) to be regulated at least by regulation of the voltage of drive DC power source (27).

The power supplied to lamp (1), specifically, the power of drive circuit (21), is regulated and set by power regulating signal (22).

Output level detection means (23) that detects the output roughly proportional to the voltage provided to said dielectric barrier discharge lamp (1) as one example shown in Figure 2 is a device that detects the voltage supplied to lamp (1). The output that is detected at that time may be the mean of the peak value, RMS value and absolute value.

In another example, a device that detects the voltage of drive DC power source (27) when drive circuit (21) regulates the power supplied to lamp (1) by regulating the voltage of drive DC power source (27) may be used.

Power control circuit (25) for regulating the power of said drive circuit (21) effects feedback control of said power regulating signal (22) so that the error between output level detection signal (24) created by said output level detection means (23) and output level target signal (26) would be minimized.

As a result, the power that is supplied to lamp (1) is controlled so as to be a roughly constant value that corresponds to the size of output level target signal (26).

This may be designed so that the power supplied to lamp (1) increases if power regulating signal (22) and the power supplied to lamp (1) have a positive correlation, that is, as power regulating signal (22) increases.

Here, the exhibition by power regulating signal (22) of a value that is significantly smaller than the appropriate value means that the anticipated power would not be consumed. For example, there is a suspicion that discharge would occur at the junction of output terminals (10,11) of power supply device (9), that disconnection would take place at electrodes (5,6), as shown in Figure 9, or that power could not be effectively applied overall, as mentioned above.

Conversely, the exhibition by power regulating signal (22) of a value that is significantly greater than the appropriate value means that unanticipated power would be consumed. For example, there is a suspicion that surface discharge would occur at the gap of both electrodes (5,6) on the surface of sealed unit (2) or that heating would take place at the insulation borders of cables connected to both electrodes (5,6) due to dielectric barrier discharge, as mentioned above.

Accordingly, abnormal discharge detection circuit (14) constantly monitors power regulating signal (22) and it safely shuts down the power supply device by sending said response (18) of abnormality detection to circuit unit (16) that permits said power supply, thereby preventing any accident from occurring if it detects that power regulating signal (22) is significantly smaller than the appropriate value, specifically, that it is smaller than the preset threshold value, or if it detects that power regulating signal (22) is significantly greater than the appropriate value, specifically, that it is greater than the preset threshold value.

Said threshold value for power regulating signal (22) must be experimentally determined in combinations of an actual power supply device (9) and lamp (1).

The signal monitored by abnormal discharge detection circuit (14) may be the signal sent from power regulating signal (22) rather than power regulating signal (22) itself. The function would be identical in that case or if it is another signal having a correlation with power regulating signal (22).

Power regulating signal (22) would show a value much greater than the appropriate value if a short should develop within transformers (81 or 114) of said power supply device (9) or in the route from the secondary side output terminal of a transformer to electrodes (5,6) of lamp (1). Conversely, a no-load open state would develop and power regulating signal (22) would show a value much smaller than the appropriate value if absolutely no power were supplied at all to lamp (1).

At that time, these phenomena can be differentiated from said abnormal discharge by carefully identifying the level of power regulating signal (22), but it is not essential.

The reason is that the fastest possible shutdown of operation of the power supply device would be advisable for safety, whether the cause is abnormal discharge, shorting, a no-load open state or any other abnormality.

Next, the invention of Claim 3 is explained using Figures 2 and 3 which are simplified diagrams for showing the concept.

The structures of the inventions in the second and third claims of the present invention are similar, but the function of abnormal discharge detection circuit (14) differs.

Fluctuation develops in the level of power regulating signal (22) because the development of abnormal discharge represents an unstable phenomenon.

Power regulation signal high frequency component signal (30) is obtained by the passage of power regulating signal (22) through high-pass filter (29) in abnormal discharge detection circuit (14). Power regulation signal fluctuation signal (33) is created following detection of the amplitude of power regulation signal high frequency component signal (30) that is created by detection circuit (32) that is constructed using a rectification circuit and a peak hold circuit. When this is detected by comparator (37) to exceed power regulation signal fluctuation threshold signal (35) corresponding to a preset threshold value, response (18) that said abnormality had been detected would be fed to circuit unit (16) that permits said power supply, thereby safely shutting down the power supply device and preventing any accident from occurring.

The cutoff frequency of said high-pass filter (29) must be empirically determined in accordance with the frequency components of fluctuation attributable to abnormal discharge in actual combinations of power supply device (9) and lamp (1).

If the effects of electrical noise in drive circuit (21), etc., must be avoided, it would be effective for said high-pass filter (29) to function as a band pass filter that blocks unnecessary high frequency components.

Said threshold value for the amplitude of the output signal of the high pass filter must be empirically determined in combinations of an actual power supply device (9) and lamp (1).

The signal monitored by abnormal discharge detection circuit (14) may be the signal sent from power regulating signal (22) rather than power regulating signal (22) itself. The function would be identical in that case or if it is another signal having a correlation with power regulating signal (22).

Output level detection means (23) that detects the output roughly proportional to the power provided to said dielectric barrier discharge lamp (1) may detect the current flowing through lamp (1) in addition to the voltage supplied to lamp (1), or the output that is detected at that time may be the mean of the peak value, RMS value and absolute value.

The voltage of drive DC power source (27) may be detected as well.

Next, the invention of Claim 4 is explained using Figures 3 and 4 which are simplified diagrams for showing the concept.

The basic concept of signal analysis for detecting abnormal discharge by abnormal discharge detection circuit (14) is explained using the same Figure 3 since it is shared with the invention of Claim 3. The notation pertaining to the invention of Claim 4 is presented in Figure 3 enclosed by parentheses for differentiation.

If abnormal discharge should develop, voltage or current fluctuation would overlap in the circuit section following drive circuit (21) since this represents an unstable phenomenon, or fluctuation due to the generation of noise would also overlap output level detection signal (24) from the output level detection means (23) for the detection of output roughly proportional to the power that is supplied to said dielectric barrier discharge lamp (1) that is mounted in this section.

Output level detection signal high frequency component signal (31) is obtained by the passage of output level detection signal (24) through high-pass filter (29) in abnormal discharge detection circuit (14). Output level detection signal fluctuation signal (34) is created following detection of the amplitude of output level detection signal high frequency component signal (31) that is created by detection circuit (32) that is constructed using a rectification circuit and a peak hold circuit. When this is detected by comparator (37) to exceed output level detection signal fluctuation threshold signal (36) corresponding to a preset threshold value, response (18) that said abnormality had been detected would be fed to circuit unit (16) that permits said power supply, thereby safely shutting down the power supply device and preventing any accident from occurring.

The cutoff frequency of said high-pass filter (29) must be empirically determined in accordance with the frequency components of fluctuation attributable to abnormal discharge in actual combinations of power supply device (9) and lamp (1).

If the effects of electrical noise in drive circuit (21), etc., must be avoided, it would be effective for said high-pass filter (29) to function as a band pass filter that blocks unnecessary high frequency components.

Setting the filter passage range so as to adequately block the frequency component of alternating current high voltage itself that is applied to lamp (1), which can be included in output level detection signal (24), would be especially important.

Said threshold value must be empirically determined in actual combinations of power supply device (9) and lamp (1).

Figure 5, a simplified block diagram of a first embodiment which is one embodiment of the second claim of the present invention, is used to explain it.

Boosting chopper DC power source (49) consists primarily of chopper gate drive circuit (43), chopper switch device (45), inductor (46), diode (47), and smoothing capacitor (48).

The mean value of the chopper output voltage signal (52), which is output level detection signal (24) in the first embodiment, is detected via diode (50) and capacitor (51) to avoid effects of the duty ratio of chopper switch device (45), but these may be eliminated if the demand for precision is moderate and the output voltage of boosting chopper DC power source (49) may be used directly as chopper output voltage signal (52).

Smoothing capacitor (39) and input DC power source (38) are connected to boosting chopper DC power source (49) here, and DC power source circuit (40) for control circuit is also connected.

The output of DC power source circuit (40) for control circuit is applied to smoothing capacitor (42) and the supply of power to each shared circuit component that requires a power supply device is depicted as DC power source line (41) for control circuit.

Saw-tooth wave generator (53) creates period saw-tooth wave signal (54) that has a frequency determined by the electrostatic capacitance of capacitor (56) and the resistance of resistor (55).

Period saw-tooth wave signal (54) from saw-tooth wave generator (53) and effective power regulation signal (62) that is created by the passage of power regulating signal (22) through diode (58) are compared by comparator (57). Base clock signal (63) that becomes the high level is created when period saw-tooth wave signal (54) is greater than effective power regulation signal (62) and this is input to D flip-flop (64) and selector (65).

D flip-flop (64) reverses with each fall of base clock signal (63) and selector (65) creates biphasic base gate signals (66,67) in accordance with the status of D flip-flop (64).

Power regulating signal (22) and the power supplied to dielectric barrier discharge lamp (1), specifically, output level detection signal (24), have a negative correlation in the circuit of the first embodiment because of this structure.

The peak value selection circuit comprising diode (58), diode (59) and resistor (60) selects the higher voltage of power regulating signal (22) or of peak duty specification signal (61) as effective power regulation signal (62).

Accordingly, peak duty specification signal (61) is selected as effective power regulation signal (62) since the voltage of peak duty specification signal (61) is roughly equal to the voltage of DC power source line (41) for control circuit in the OFF state. Therefore, base clock signal (63) is not created.

That is because the maximum voltage of period saw-tooth wave signal (54) is set so that the sequential voltage fraction of diode (59) would be significantly lower than the voltage of DC power source line (41) for control circuit.

In the lit state, biphasic base gate signals (66,67) are fed to inverter gate drive circuits (75,76) as inverter gate drive signals (77,78) via a buffer circuit comprising buffer transistors (68,69) and resistors (70,71).

Inverter gate drive signals (77,78) are added by resistor (74) via diodes (72,73), and are input to said chopper gate drive circuit (43) as chopper gate drive signal (44) having double the frequency of inverter gate drive signals (77,78).

Inverter gate drive circuits (75,76) treat boosting chopper DC power source (49) as the drive DC power source (27), drive push-pull inverter comprising inverter switch devices (79,80) and transformer (81), and add roughly square wave voltage to dielectric barrier discharge lamp (1) which is a load on power supply device (9).

The amplitude of roughly square wave lamp voltage is regulated by the output voltage of drive DC power source (27) while the output voltage of drive DC power source (27) is regulated by the duty ratio of said chopper gate drive signal (44).

Chopper gate drive signal (44) is created from inverter gate drive signals (77,78) in the first embodiment, but this utilizes the facts that roughly square wave voltage is applied to dielectric barrier discharge lamp (1) and that the effective range of inverter gate drive signals (77,78) essentially ceases to be important since the load current spontaneously expires even without disconnection of the current of power supply device (9) once charging of the capacitor of dielectric barrier discharge lamp (1) has been completed since current flows in light of the fact that dielectrics (7,8) function as capacitors rather than because of the direct flow of current from capacitors (5,6) through discharge space (3) because dielectrics (7,8) are interposed between capacitors (5,6) and discharge space (3) in dielectric barrier discharge lamp (1), as mentioned above.

If fluctuation of the effective range of inverter gate drive signals (77,78) becomes a problem, a means of making the effective range constant, such as a monostable multivibrator, may be incorporated therein.

The waveform of each section pertaining to this circuit is shown in Figure 6, which shows saw-tooth wave signal (54) and effective power regulation signal (62) in (a), chopper gate drive signal (44) in (b), inverter gate drive signals (77,78) in (c) and (d), and the respective waveforms of the current of inductor (46) in (e), and of the voltage of lamp (1) in (f).

In the OFF state, specifically, when light switch (82) is open, current which flows via resistor (90) since transistor (95) is activated via resistor (87) all flows into transistor (95), with the result being that the voltage of capacitor (92) is not elevated.

The voltage of peak duty specification signal (61) which had been roughly equal to the voltage of DC power source line (41) for control circuit is lowered to the voltage determined by the differential voltage of resistor (88) and resistor (89) since the shorted state of resistor (88) is released due to deactivation of transistor (94) which had been activated via resistor (86) since the voltage of resistor (85) had been raised by activation of transistor (93) through the circulation of current via resistor (83) and resistor (84) when light switch (82) is closed to transit to the lit state.

The resistance of resistor (88) is regulated so that the maximum power of the power supply device would have appropriate reserve in light of the target rated power since the upper limit of the duty ratio of chopper gate drive signal (44) increases as the voltage falls at this time.

When the voltage of peak duty specification signal (61) falls, effective power regulation signal (62) falls to a level at which the peak power of the power supply device can be exhibited through operation of the peak value selection circuit comprising diode (58), diode (59) and resistor (60). The creation of base clock signal (63), the activation of chopper gate drive circuit (43), and the drive of chopper switch device (45) commence, whereupon the output voltage of boosting chopper DC power source (49) rises. Next, activation of inverter gate drive circuits (75,76) as well as drive of inverter switch devices (79,80) commence, and the application of high voltage alternating current to dielectric barrier discharge lamp (1) commences.

Power regulating signal (22) which is the output of error integrator circuit (100) comprising operational amplifier (98) and integral capacitor (99) is saturated since it reaches virtually zero volts because the differential voltage of chopper output voltage signal (52) due to variable resistor (96) and resistor (97) is lower than the differential voltage due to resistors (101,102) which determine the target voltage.

For that reason, current does not flow through diode (103) and resistor (104). Accordingly, transistor (106) is deactivated because current does not flow through diode (105), and the voltage of capacitor (92) begins to rise at a speed determined by the electrostatic capacitance of capacitor (92) and the resistance value of resistor (90) because transistor (95) is also deactivated at that time.

However, the output voltage of boosting chopper DC power source (49), specifically, the lamp voltage, rapidly rises since effective power regulation signal (62) reaches a level at which the maximum power of power supply device is demonstrated, as mentioned above, immediately after lighting commences. The initial applied voltage required for initial lighting of dielectric barrier discharge lamp (1) is secured and initial lighting is reliably carried out.

Furthermore, the voltage of chopper output voltage signal (52) is determined by the differential voltage attributable to resistors (101,102). Power regulating signal (22) begins to rise at a speed in accordance with the time constant of error integrator circuit (100) even if said target value is temporarily exceeded, and before long, the voltage of chopper output voltage signal (52) is controlled so as to coincide with the target value.

Transistor (106) is activated when power regulating signal (22) reaches a level determined by resistor (104), and the voltage of capacitor (92) is reset at virtually zero volts.

However, if excess power consumption should take place due to localized heating brought about by surface discharge developing in the gap between electrodes (5,6) on the surface of lamp sealed unit (2), localized heating brought about by the development of dielectric barrier discharge at the insulation borders of cables connected to both electrodes (5,6), discharge at the junction of output terminals (10,11) of power supply device (9), discharge within transformers (81 or 114) or from the secondary side output terminal of a transformer to output terminals (10,11) of power supply device (9) as mentioned above, at this time or at a subsequent time, the voltage of chopper output voltage signal (52) would not reach said target value that is determined by the differential voltage attributable to resistors (101,102) since the duty ratio of chopper gate drive signal (44) is limited to the level of peak duty specification signal (61) that is determined by the resistance of resistor (88). Power regulating signal (22) would not rise to the level determined by resistor (104), and current would not flow through diode (103) and resistor (104). Therefore, transistor (106) would be deactivated since current would not flow through diode (105) and the voltage of capacitor (92) would begin to rise.

When this voltage rise exceeds the voltage determined by the differential voltage of resistor (88) and resistor (89), transistor (91) of the emitter-follower connection raises the voltage of resistor (89), specifically, peak duty specification signal (61), to a voltage that is equal to capacitor (92).

As the voltage of capacitor (92) continues to rise, the voltage of peak duty specification signal (61) approaches a level roughly equal to the voltage of DC power source line (41) for control circuit before long. The generation of base clock signal (63) stops and the power supply device of the present invention is shut down, thereby preventing any accident from occurring.

Conversely, the overall target power consumption would not be reached if discharge should occur at the junction of output terminals (10,11) of power supply device (9) or if disconnection should develop at capacitor (56) as shown in Figure 9, as mentioned above. Consequently, error integrator circuit (100) would raise power regulating signal (22) so as to correspond to the insufficient load state.

Since current ceases to flow through diode (109) accompanying elevation of power regulating signal (22) when the voltage that is generated at resistor (110) via diode (107) exceeds the voltage level determined by constant voltage diode (111) and resistor (112), transistor (113) which had been activated hitherto is deactivated.

At this time, transistor (106) is deactivated because current ceases to flow through diode (105) and the voltage of capacitor (92) begins to rise after the voltage of resistor (104) has declined because of obstruction of current which had flowed through resistor (104) via transistor (113).

Just as above, when this voltage rise exceeds the voltage determined by the differential voltage of resistor (88) and resistor (89), transistor (91) of the emitter-follower connection raises the voltage of resistor (89), specifically, peak duty specification signal (61), to a voltage that is equal to capacitor (92).

As the voltage of capacitor (92) continues to rise, the voltage of peak duty specification signal (61) approaches a level roughly equal to the voltage of DC power source line (41) for control circuit before long. The generation of base clock signal (63) stops and the power supply device of the present invention is shut down, thereby preventing any accident from occurring.

When the generation of base clock signal (63) in said mechanism is halted accompanying elevation of power regulating signal (22), chopper output voltage signal (52) would spontaneously fall before long due to shutdown of boosting chopper DC power source (49) if diode (108) which was inserted in parallel with diode (107) so that current would flow cumulatively through resistor (110) were not present. At that time, error integrator circuit (100) would lower power regulating signal (22) so that chopper output voltage signal (52) could recover to the target value.

Thereupon, the non-activation of said transistor (113) would be removed and the creation of base clock signal (63) would resume. Diode (108) was inserted to avoid such disadvantageous operation since this would subsequently repeat.

Resumption of the generation of base clock signal (63) would be prevented due to the continued flow of current through resistor (110) even if power regulating signal (22) should fall so long as peak duty specification signal (61) remains at a high voltage level if diode (108) is present.

Such latch operation that is run by diode (108) could be reset by disconnecting light switch (82) and removing the charge of capacitor (92).

As explained above, the first embodiment of the present invention can demonstrate the benefits of the present invention that is constructed in accordance with Claim 2. Such benefits include the ability to completely avoid the dangers of serious accidents that cannot be overlooked for the sake of safety that can arise, including surface discharge developing in the gap between electrodes (5,6) on the surface of lamp sealed unit (2), dielectric barrier discharge at the insulation borders of cables connected to both electrodes (5,6), discharge at the junction of output terminals (10,11) of power supply device (9), discharge within transformers (81 or 114) or from the secondary side output terminal of a transformer to output terminals (10,11) of power supply device (9), or disconnection at electrodes (5,6) as shown in Figure 9.

The present invention has the extremely high value of preventing any accident from occurring by safely shutting down the power supply device if a short should develop anywhere within transformers (81 or 114) in power supply device (9) or in the route from the secondary side output terminal of a transformer to electrodes (5,6) of lamp (1) or if a non-load open state should develop when absolutely no power is supplied to lamp (1), as mentioned above.

Figure 7 is a simplified block diagram of a second embodiment which is one embodiment of the invention of the fourth claim. The following explanation uses this diagram.

Figure 7 shows a system termed a flyback inverter. One end of the primary-side winding of transistor (114) is connected to input DC power source (38) while the other end is connected to inverter switch device (115). Inverter switch device (115) is driven by gate drive circuit (116).

Comparator (57) compares period saw-tooth wave signal (54) from saw-tooth wave generator (53) with duty ratio setting signal (118) that sets the power of power supply device (9). The output is then input to gate drive circuit (116) as gate drive signal (117) via gate (119).

Figure 8 shows the waveforms associated with this circuit. (a) shows the waveforms of period saw-tooth wave signal (54) and duty ratio setting signal (118), (b) the waveform of gate drive signal (117), (c) the waveform of the current on the primary side of transistor (114), and (d) the waveform on the secondary side of transistor (114).

One end of the secondary side winding of transistor (114) is connected to the ground of the circuit while the other end is connected to one of electrodes (5,6) of lamp (1) as a terminal, the high-voltage side.

The other electrode of lamp (1) is connected to the circuit ground via resistor (120).

Resistor (120) functions as output level detection means (23) for detecting the output roughly proportional to the power provided to said dielectric barrier discharge lamp (1) since it can detect the current flowing through lamp (1) by measuring the terminal voltage.

Resistor (120) may be a circuit device other than a resistor, such as an impedance device including a capacitor.

Diode (121) selects only components having positive polarity and converts them into output roughly proportional to the power. Output level detection signal (24) from resistor (120) appears when discharge develops via high-pass filter (29) comprising capacitor (122) and resistor (123), and it fluctuates greatly. Otherwise, only output level detection signal high frequency component signal (31) including noise is selected and transited.

The peak value of output level detection signal high frequency component signal (31) which is transited is retained as output level detection signal fluctuation signal (34) via diode (124) and capacitor (125). It is then input to comparator (37) with output level detection signal fluctuation threshold signal (36).

The attenuation speed of output level detection signal fluctuation signal (34) that is retained is established by resistor (126).

When output level detection signal fluctuation signal (34) is greater than output level detection signal fluctuation threshold signal (36), comparator (37) inputs response (18) of detection of a low-level abnormality to latch circuit (127). Latch circuit (127) changes latch output signal (128) which is the output to a low level and retains it.

The power supply device of the present invention is safely shut down and any accident is prevented from occurring since the output of comparator (57) cannot transit through gate (119) if latch output signal (128) is at the low level.

Resistor (129) and capacitor (130) set latch output signal (128) at a high level after automatically initializing latch circuit (127) when input DC power source (38) of power supply device (9) is activated. They may be structured so as to initialize it based on an external signal instead of resistor (129) and capacitor (130).

As explained above, the second embodiment of the present invention can demonstrate the benefits of the present invention that is constructed in accordance with Claim 4. Such benefits include the ability to completely avoid the dangers of serious accidents that cannot be overlooked for the sake of safety that can arise, including surface discharge developing in the gap between electrodes (5,6) on the surface of lamp sealed unit (2), dielectric barrier discharge at the insulation borders of cables connected to both electrodes (5,6), discharge at the junction of output terminals (10,11) of power supply device (9), and discharge from disconnection at electrodes (5,6) as shown in Figure 9.

An embodiment of the third claim of the present invention is not presented, but for simplicity, it can be implemented by replacing abnormal discharge detection circuit (14) shown in Figure 5, which is an embodiment of the second claim of the present invention, with the circuit shown in Figure 7.

Two or three of the inventions presented in claims 2, 3 or 4 of the present invention may be combined, by means of which a dielectric barrier discharge lamp light source device having far more reliable detection of abnormal discharge can be realized.

The reason is that redundancy would be introduced into the system since the principles of detecting abnormal discharge differ among the inventions of claims 2, 3 and 4.

For example, a dielectric barrier discharge lamp light source device combining the inventions from claims 2 and 4 can be realized through improvements so that transistor (106) is deactivated even when the output of comparator (37) is low level by adding sections comprising resistor (120), diode (121) and abnormal discharge detection circuit (14) from the structure shown in Figure 7 to the structure shown in Figure 5 and by connecting the output of comparator (37) to the base of transistor (106) via an additional diode.

However, the directions of said additional diode would be toward the side of comparator (37) by the cathode and toward the side of transistor (106) by the anode.

The embodiment has been explained using a push-pull inverter and a flyback inverter as the drive circuit, but the efficacy of the present invention would be similarly realized by a structure using other modalities such as half-bridge inverters, full-bridge inverters or other types of inverters.

The first embodiment especially presented a concrete circuit structure, but the outstanding benefits of the present invention can be effectively demonstrated in a dielectric barrier discharge lamp light source device having a structure based on the design concepts of the claims of the present invention without being restricted to said structure.

Needless to say, the details of circuit operation explained in the embodiments such as inventive measures including signal polarity, the selection, addition, elimination of concrete circuit devices, the insertion of devices or modifications based on economic grounds may be actively carried out in the design of actual devices.

For example, sequential connection of the necessary number of conventional diodes if the voltage of constant voltage diode (111) shown in Figure 5 is too low to permit the use of a commercial tuner diode, or survey and adoption of commercial integrated circuits (for example, TL494 from Texas Instruments or µPC494 from NEC Corporation, etc.) that integrate part or all of the constituent circuit components that appear in the first embodiment such as DC power source circuit (40) for control circuit, saw-tooth wave generator (53), inverter gate drive circuits (75,76), and operational amplifier (98) would fall within the purview of said inventive measures.

Furthermore, the benefits of the present invention are demonstrated best when the elements associated with detection of abnormal discharge such as output level detection means (23) are structured integrally with power supply device (9), but if part or all thereof are installed separately from the body of power supply device (9) with signal reception accomplished using a cable for some reason, the functional benefits of the present invention would still be effectively demonstrated.

Of course, any discharge gas may be applied absolutely independently in the present invention.

For example, metal vapors such as mercury or mixtures/compounds of these with halogens known as metal halides may be effectively employed.

Furthermore, noble gases such as neon, argon, krypton, xenon, radon as well as mixtures/compounds of these with halogens including fluorine, chlorine, bromine, etc., can be applied as discharge gases to so-called dielectric barrier discharge excimer lamps as well that generate ultraviolet light by excimer emission.

Furthermore, the present invention is extremely useful in fluorescent lamps that utilize light emission of visible light by excitation of luminants through light emissions that are created from discharge gas having a phosphor formed on at least part of the inner or outer surface of said sealed unit (2).

The present invention provides a dielectric barrier discharge lamp light source device having discharge space (3) filled with discharge gas that emits light through dielectric barrier discharge, said device provided with a dielectric barrier discharge lamp (1) having a structure in which dielectrics (7,8) are interposed between at least one of two electrodes (5,6) to induce a discharge phenomenon in said discharge gas and a power supply device (9) to provide alternating current high voltage to said electrodes (5,6) of said dielectric barrier discharge lamp (1), wherein said power supply device (9) has abnormal discharge detection circuit (14) to detect abnormal discharge occurring within transformers (81 or 114) in said power supply device (9) or in the section from the secondary side output terminal of a transformer to said electrodes (5,6), said power supply device (9) halting the supply of alternating current high voltage from said power supply device (9) to said dielectric barrier discharge lamp (1) when said abnormal discharge detection circuit (14) detects abnormal discharge, and said abnormal discharge detection circuit (14) characterized by having the ability to detect the abnormal discharge only by electrical behavior of said power supply device (9) without being a detector of special abnormal discharge due to photo-, acoustic-, thermal- or chemical matter.

Furthermore, said power supply device (9) has output level detection means (23) that detects the output roughly proportional to the voltage provided to said dielectric barrier discharge lamp (1), drive circuit (21) that provides high voltage alternating current power to said dielectric barrier discharge lamp (1), and power control circuit (25) that regulates the power of said drive circuit (21), so that said drive circuit (21) can set the power supply capacity by power regulating signal (22) created by said power control circuit (25), said power control circuit (25) effects feedback control of said power regulating signal (22) so as to minimize the error between output level detection signal (24) created by said output level detection means (23) and output level target signal (26), and said abnormal discharge detection circuit (14) can detect at least one of two cases, either deviation of said power regulating signal (22) from the upper limit of the established power or deviation of said power regulating signal (22) from the lower limit of the established power. By adopting such a structure, the hazards of abnormal discharge which could occur within transformers (81 or 114) in said power supply device (9) of a dielectric barrier discharge lamp light source device or in the section from the secondary side output terminal of a transformer to said electrodes (5,6) can be safely and economically prevented.

Furthermore, said power supply device (9) has output level detection means (23) that detects the output roughly proportional to the power provided to said dielectric barrier discharge lamp (1), drive circuit (21) that provides high voltage alternating current power to said dielectric barrier discharge lamp (1), and power control circuit (25) that regulates the power of said drive circuit (21). Said drive circuit (21) can set the power supply capacity by power regulating signal (22) created by said power control circuit (25), said power control circuit (25) effects feedback control of said power regulating signal (22) so as to minimize the error between output level detection signal (24) created by said output level detection means (23) and output level target signal (26), and said abnormal discharge detection circuit (14) can detect if the frequency range component of said power regulating signal (22) having preset fluctuation should exceed an established level. By adopting such a structure, the hazards of abnormal discharge which could occur within transformers (81 or 114) in said power supply device (9) of a dielectric barrier discharge lamp light source device or in the section from the secondary side output terminal of a transformer to said electrodes (5,6) can be safely and economically prevented.

Furthermore, said power supply device (9) has output level detection means (23) that detects the output roughly proportional to the power provided to said dielectric barrier discharge lamp (1) in a stage after said drive circuit (21), and said abnormal discharge detection circuit (14) can detect if the frequency range component of output level detection signal (24) created by said output level detection means (23) having preset fluctuation should exceed an established level. By adopting such a structure, the hazards of abnormal discharge which could occur within transformers (81 or 114) in said power supply device (9) of a dielectric barrier discharge lamp light source device or in the section from the secondary side output terminal of a transformer to said electrodes (5,6) can be safely and economically prevented.

### Possibility of Industrial Utilization

The present invention concerns a light source device that utilizes the light emission or heating of discharge gas through so-called dielectric barrier discharge in a dielectric barrier discharge lamp light source device such as a dielectric barrier discharge lamp that generates ultraviolet light through excimer light emission or a lamp known as a noble gas lamp that combines a phosphor.

Any discharge gas may be applied absolutely independently in the present invention. Metal vapors such as mercury or mixtures/compounds of these with halogens known as metal halides may be effectively employed. Furthermore, noble gases such as neon, argon, krypton, xenon, radon as well as mixtures/compounds of these with halogens including fluorine, chlorine, bromine, etc., can be effectively applied. A phosphor layer may be formed on at least part of the inner or outer surface of said sealed unit (2) and a phosphor may be excited by light emissions created from discharge gas in a fluorescent lamp utilizing the light emission of visible light, which would be extremely useful.

## Claims

1. A dielectric barrier discharge lamp light source device having a discharge space (3) filled with discharge gas that emits light through dielectric barrier discharge, said device provided with a dielectric barrier discharge lamp (1) having a structure in which dielectrics (7,8) are interposed between at least one of two electrodes (5,6) to induce a discharge phenomenon in said discharge gas, and a power supply device (9) to provide alternating current high voltage to said electrodes (5,6) of said dielectric barrier discharge lamp (1), wherein said power supply device (9) has abnormal discharge detection circuit (14) to detect abnormal discharge occurring within transformers (114) in said power supply device (9) or in the section from the secondary side output terminal of a transformer to said electrodes (5,6), said power supply device (9) halting the supply of alternating current high voltage from said power supply device (9) to said dielectric barrier discharge lamp (1) when said abnormal discharge detection circuit (14) detects abnormal discharge,
**characterized in that** said abnormal discharge detection circuit (14) has the ability to detect the abnormal discharge only by electrical behavior of the power supply device (9) which is induced by the abnormal discharge, said power supply device (9) has output level detection means (23) that detects the output roughly proportional to the power provided to said dielectric barrier discharge lamp (1), drive circuit (21) that provides high voltage alternating current power to said dielectric barrier discharge lamp (1), and power control circuit (25) that regulates the power of said drive circuit (21), wherein said drive circuit (21) can set the power supply output power by power regulating signal (22) created by said power control circuit (25), said power control circuit (25) effects feedback control of said power regulating signal (22) so as to minimize the error between output level detection signal (24) created by said output level detection means (23) and output level target signal (26), and said abnormal discharge detection circuit (14) can detect if a frequency range component of said power regulating signal (22) exceeds an established level.

2. A dielectric barrier discharge lamp light source device according to claim 1 **characterized in that** said abnormal discharge detection circuit (14) has the ability to detect the abnormal discharge only by electrical behavior of the power supply device (9) which is induced by the abnormal discharge, said power supply device (9) has output level detection means (23) that detects the output roughly proportional to the power provided to said dielectric barrier discharge lamp (1) in a stage after said drive circuit (21), and said abnormal discharge detection circuit (14) can detect if a frequency range component of output level detection signal (24) created by said output level detection means (23) exceeds an established level.

## Patentansprüche

1. Dielektrisches Barrierentladungslampen-Lichtquellengerät, das einen Entladungsraum (3) aufweist, der mit Entladungsgas gefüllt ist, das Licht durch dielektrische Barrierentladung emittiert, wobei das Gerät mit einer dielektrischen Barrierentladungslampe (1), die eine Struktur aufweist, in der Dielektrika (7, 8) zwischen mindestens einer von zwei Elektroden (5, 6) zum Induzieren einer Entladungserscheinung im Entladungsgas eingefügt sind, und einem Stromversorgungsgerät (9) zum Bereitstellen von Wechselstrom hoher Spannung für die Elektroden (5, 6) der dielektrischen Barrierentladungslampe (1) versehen ist, wobei das Stromversorgungsgerät (9) eine Detektionsschaltung für unnormale Entladung (14) aufweist, um unnormale Entladung zu detektieren, die in Transformatoren (114) im Stromversorgungsgerät (9) oder im Abschnitt vom sekundärseitigen Ausgangsanschluss eines Transformators zu den Elektroden (5, 6) auftritt, wobei das Stromversorgungsgerät (9) die Versorgung mit Wechselstrom hoher Spannung vom Stromversorgungsgerät (9) zur dielektrischen Barrierentladungslampe (1) stoppt, wenn die Detektionsschaltung für unnormale Entladung (14) unnormale Entladung detektiert,
**dadurch gekennzeichnet ,**
**dass** die Detektionsschaltung für unnormale Entladung (14) die Fähigkeit aufweist, unnormale Entladung nur durch elektrisches Verhalten des Stromversorgungsgeräts (9) zu detektieren, das durch die unnormale Entladung induziert ist, das Stromversorgungsgerät (9) Ausgangspegel-Detektionsmittel (23), das die Ausgabe detektiert, die ungefähr proportional der Leistung ist, die der dielektrischen Barrierentladungslampe (1) bereitgestellt ist, Ansteuerschaltung (21), die der dielektrischen Barrierentladungslampe (1) Hochspannungs-Wechselstromversorgung bereitstellt, und Leistungssteuerschaltung (25) aufweist, die die Leistung der Ansteuerschaltung (21) regelt, wobei die Ansteuerschaltung (21) die Stromversorgungs-Ausgangsleistung durch Leistungsregelsignal (22) einstellen kann, das durch die Leistungssteuerschaltung (25) erzeugt wird, die Leistungssteuerschaltung (25) Regelung des Leistungsregelsignals (22) bewirkt, um so den Fehler zwischen Ausgangspegel-Detektionssignal (24), das durch Ausgangspegel-Detektionsmittel (23) erzeugt wird, und Ausgangspegel-Zielsignal (26) zu minimieren, und die Detektionsschaltung für unnormale Entladung (14) detektieren kann, ob ein Frequenzbereichsanteil des Leistungsregelsignals (22) eine festgelegte Höhe überschreitet.

2. Dielektrisches Barrierentladungslampen-Lichtquellengerät nach Anspruch 1,
**dadurchgekennzeichnet**,
dass die Detektionsschaltung für unnormale Entladung (14) die Fähigkeit aufweist, unnormale Entladung nur durch elektrisches Verhalten des Stromversorgungsgeräts (9) zu detektieren, das durch die unnormale Entladung induziert ist, das Stromversorgungsgerät (9) Ausgangspegel-Detektionsmittel (23) aufweist, das die Ausgabe, die ungefähr proportional der Leistung ist, die der dielektrischen Barrierentladungslampe (1) bereitgestellt ist, in einer Stufe nach der Ansteuerschaltung (21) detektiert, und die Detektionsschaltung für unnormale Entladung (14) detektieren kann, ob ein Frequenzbereichsanteil des Ausgangspegel-Detektionssignals (24), das durch das Ausgangspegel-Detektionsmittel (23) erzeugt wird, eine festgelegte Höhe überschreitet.

## Revendications

1. Dispositif de source lumineuse à lampe à décharge diélectrique comportant un espace de décharge (3) rempli de gaz de décharge qui émet de la lumière par décharge de barrière diélectrique, lequel dispositif équipé d'une lampe à décharge de barrière diélectrique (1) a une structure dans laquelle des diélectriques (7, 8) sont interposés entre au moins une de deux électrodes (5, 6) pour induire un phénomène de décharge dans ledit gaz de décharge, et d'un dispositif d'alimentation électrique (9) destiné à fournir un courant alternatif sous haute tension auxdites électrodes (5, 6) de ladite lampe à décharge de barrière diélectrique (1), ledit dispositif d'alimentation électrique (9) comportant un circuit de détection des décharges anormales (14) destiné à détecter les décharges anormales survenant dans les transformateurs (114) dudit dispositif d'alimentation électrique (9) ou dans la section comprise entre la borne de sortie du côté secondaire d'un transformateur et lesdites électrodes (5, 6), ledit dispositif d'alimentation électrique (9) coupant l'alimentation en courant alternatif sous haute tension par ledit dispositif d'alimentation électrique (9) vers ladite lampe à décharge de barrière diélectrique (1) quand ledit circuit de détection des décharges anormales (14) détecte une décharge anormale,
**caractérisé en ce que**
ledit circuit de détection des décharges anormales (14) a la capacité de détecter la décharge anormale seulement par le comportement électrique du dispositif d'alimentation électrique (9) qui est induit par la décharge anormale, ledit dispositif d'alimentation électrique (9) possède des moyens de détection du niveau de sortie (23) qui détectent la sortie approximativement proportionnelle à la puissance fournie à ladite lampe à décharge de barrière diélectrique (1), un circuit d'excitation (21) qui fournit une alimentation en courant alternatif sous haute tension à ladite lampe à décharge de barrière diélectrique (1), et un circuit de contrôle de l'alimentation (25) qui régule la puissance dudit circuit d'excitation (21), ledit circuit d'excitation (21) pouvant réguler la puissance de sortie de l'alimentation électrique à l'aide du signal de régulation de l'alimentation (22) créé par ledit circuit de contrôle de l'alimentation (25), ledit circuit de contrôle de l'alimentation (25) effectuant un contrôle rétroactif dudit signal de régulation de l'alimentation (22) de manière à minimiser l'erreur entre le signal de détection du niveau de sortie (24) créé par ledit moyens de détection du niveau de sortie (23) et le signal de consigne du niveau de sortie (26), et ledit circuit de détection des décharges anormales (14) pouvant détecter si un composant de la plage de fréquences dudit signal de régulation de l'alimentation (22) dépasse un niveau établi.

2. Dispositif de source lumineuse à lampe à décharge de barrière diélectrique selon la revendication 1,
**caractérisé en ce que**
ledit circuit de détection des décharges anormales (14) a la capacité de détecter la décharge anormale seulement par le comportement électrique du dispositif d'alimentation électrique (9) qui est induit par la décharge anormale, ledit dispositif d'alimentation électrique (9) possède des moyens de détection du niveau de sortie (23) qui détectent la sortie approximativement proportionnelle à la puissance fournie à ladite lampe à décharge de barrière diélectrique (1) dans un étage suivant ledit circuit d'excitation (21), et ledit circuit de détection des décharges anormales (14) peut détecter si un composant de la plage de fréquences du signal de détection du niveau de sortie (24) créé par lesdits moyens de détection du niveau de sortie (23) dépasse un niveau établi.
